# EUROPEAN PATENT SPECIFICATION

(11) **EP 0 316 804 B1**
(45) Date of publication and mention of the grant of the patent: **07.01.1993**
(21) Application number: 88118831.2
(22) Date of filing: 11.11.1988
(51) Int. Cl.: G05F 1/70, H02J 3/18

(54) **Reactive power controller**
Blindleistungsregler
Régulateur de puissance réactive

(30) Priority: 12.11.1987 JP 284216/87
(43) Date of publication of application: 24.05.1989
(73) Proprietor: KABUSHIKI KAISHA TOSHIBA, Kawasaki-shi, Kanagawa-ken 210 (JP)
(72) Inventor: Hirose, Syunichi, Setagaya-ku Tokyo (JP); Furuhashi, Takeshi, Tempaku-ku Nagoya-shi Aichi-ken (JP)
(74) Representative: Ritter und Edler von Fischern, Bernhard,Dipl.-Ing.

(56) References cited:
- DE-A- 3 708 468
- JP-B-59 044 646

## Description

### BACKGROUND OF THE INVENTION

### Field of the Invention

The present invention relates to a voltage-controlled reactive power controller for controlling a reactive power output from a self-commutated inverter connected to an AC system power source by adjusting an output AC voltage of self-commutated inverter.

### Description of the Prior Art

A device for controlling a reactive power output from a self-commutated inverter has been known, as can be found in Japanese patent publication JP-A 59-44646 by Tada et al. or in Japanese patent publication JP-A 64-001429, (US-A 4,903,184) by one of the present inventors, which controls the reactive power output from the self-commutated inverter by regulating a DC voltage on the self-commutated inverter.

Such a device most typically comprises an inverter including controllable rectifier elements such as gate turn-off thyristors (referred hereafter as GTO) and diodes, a DC capacitor connected in parallel to the inverter, a reactor connected between the inverter and the AC system power source, and means for regulating the DC voltage on the inverter.

Now, such a device is known to have a following problem. Namely, the DC capacitor is charged up by the AC system power source even when the inverter is not in operation in which case the GTOs of the inverter is not conducting electricity. This is due to the fact that the diodes of the inverter are forming a rectifier circuit. The DC voltage over the DC capacitor in this case is equal to (1.41 x V_{sy}) where V_{sy} is the supply voltage of the AC system power source. When the inverter is put in operation so as to control a reactive power, the reactive power due to the DC voltage (1.41 x V_{sy}) over the DC capacitor present initially cannot be controlled and will affect the AC system power source. In the prior art reactive power controller, there is provided a control compensator which eventually eliminates the effect of this uncontrolled reactive power. However, the operation of the control compensator to eliminate the effect of the initial uncontrolled reactive power takes a finite amount of time depending on the response speed of the control compensator, so that the adverse effect of the initial uncontrolled reactive power on the AC system power source cannot completely be ignored and remains as an outstanding problem associated with the prior art reactive power controller.

DE-A-3 708 468 describes a reactive compensation system for an AC power system which includes an energy source and a compensation device to direct the supply of energy to, or the absorption of energy from, the AC system in order to smooth fluctuations in current caused by certain types of user. A self-commutated inverter and a capacitor are used to generate a DC voltage which is used as a control signal. The current delivered to the self-commutated inverter are adjusted in accordance with the DC voltage across the capacitor and the power in the AC system. "Thyristors and their Applications" printed by Mills and Boons, 1972, describes the control of thyristors by pulse width modulation.

### SUMMARY OF THE INVENTION

It is therefore an object of the present invention to provide a reactive power controller capable of eliminating the initial uncontrollable reactive power and thereby realizing an initiation of the reactive power control without an abrupt disturbance on the AC system power source.

This object is achieved in the present invention by providing a reactive power controller for use in an AC system, comprising: self-commutated inverter means including controllable rectifier elements and diodes for generating a reactive power; a DC capacitor connected in parallel to the self-commutated inverter means; a coupling reactor connected between the self-commutated inverter means and an AC system power source; and modulation control means for producing a modulation control signal indicating amounts of an amplitude and a phase of an output AC voltage of the self-commutated inverter means to be adjusted in accordance with a DC voltage over the DC capacitor, **characterized by** means for adjusting the amplitude and the phase of the output AC voltage of the self-commutated inverter means in accordance with the modulation control signal from the means for producing said means for adjusting including: reference means for setting a reference DC voltage in accordance with the AC voltage from the AC system power source and the modulation control signal from the producing means; control compensator means for determining a phase difference between the output AC voltage of the self-commutated inverter means and the AC voltage from the AC system power source in accordance with the reference DC voltage specified by the reference means; and phase control means for adjusting the amplitude and the phase of the output AC voltage of the self-commutated inverter means in accordance with the modulation control signal from the modulation control means and the phase difference determined by the control compensator means.

### BRIEF DESCRIPTION OF THE DRAWINGS

Other features and advantages of the present invention will become apparent from the following description taken in conjunction with the accompanying drawings of which:
Fig. 1 is a block diagram of one embodiment of a reactive power controller according to the present invention,
Fig. 2 is a graph of a modulation control signal in the reactive power controller shown in Fig. 1 as a function of time,
Fig. 3 is a detail block diagram of an inverter in the reactive power controller shown in Fig. 1, and
Fig. 4 (A) and (B) are charts of an AC system voltage, an inverter output voltage, and timings for the electricity conduction of rectifier elements in the inverter shown in Fig. 3.

### DETAILED DESCRIPTION OF THE PREFERRED EMBODIMENTS

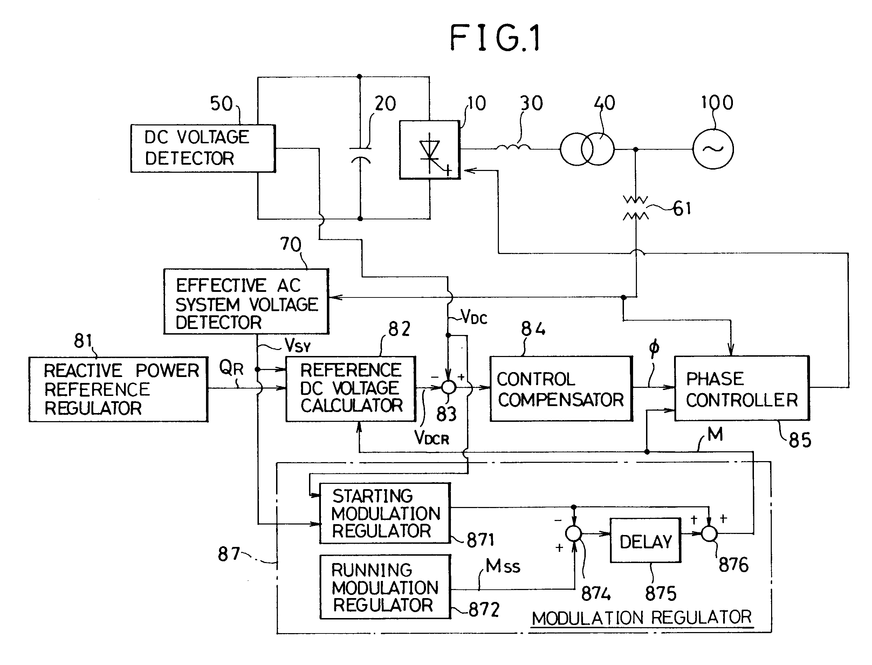

Referring now to Fig. 1, there is shown one embodiment of a reactive power controller according to the present invention.

In Fig. 1, the reactive power controller comprises an inverter 10 having controllable rectifier elements, a DC capacitor 20 connected in parallel to the inverter 10, a coupling reactor 30 and a coupling transformer 40, connected between the inverter 10 and an AC system power source 100, a DC voltage detector 50 connected in parallel to the DC capacitor 20 for producing a DC voltage signal V_{DC}, a potential transformer 61 for detecting an AC system voltage, an effective AC system voltage detector 70 connected to the potential transformer 61 for producing a system voltage signal V_{SY}, a reactive power reference regulator, hereinafter referred to as Q-reference regulator, 81 for producing a reference reactive power signal QR, a reference DC voltage calculator 82 for producing a reference DC voltage signal V_{DCR} from the system voltage signal V_{SY}, the reference reactive power signal Q_{R}, and a modulation control signal M to be explained below, an adder 83 for calculating a difference signal (V_{DC} - V_{DCR}), a control compensator 84 for producing a phase difference angle φ between an output AC voltage V_{IN} of the inverter 10 and the system voltage signal V_{SY} from the difference signal (V_{DC} - V_{DCR}), a phase controller 85 for adjusting periods of the electricity conduction of the controllable rectifier elements of the inverter 10 in accordance with the phase difference angle φ and the modulation control signal M, and a modulation regulator 87 for producing the modulation control signal M from the DC voltage signal V_{DC} and the system voltage signal V_{SY}.

The modulation regulator 87 comprises a starting modulation regulator 871 for producing a starting modulation control signal M_{ST} from the DC voltage signal V_{DC} and the system voltage signal V_{SY}, a running modulation regulator 872 for producing a running modulation control signal M_{SS}, a first adder 874 for calculating a difference (M_{SS} - M_{ST}), a delay 875 for delaying the difference (M_{SS} M_{ST}) from the adder 874, and a second adder 876 for calculating the quantity [(M_{SS} - M_{ST}) + M_{ST}] as the modulation control signal M.

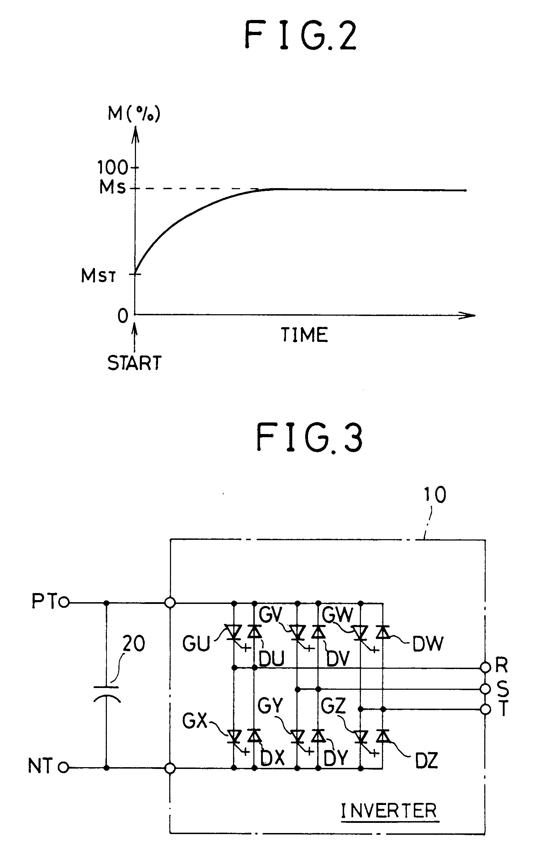

As shown in Fig. 2, the modulation control signal M varies gradually from the starting value M_{ST} to the running value M_{SS} within a predetermined period of time from the start of the operation due to the effect of the delay 875. Here, the running modulation signal M_{SS} is determined to be such that the corresponding reactive power Q is equal to the value of the reference reactive power signal Q_{R}, and is set to be greater than the starting modulation signal M_{ST} in order not to raise the DC voltage signal V_{DC} to an unnecessarily high level. This latter caution is taken because in the reactive power controller, the smaller the modulation control signal M is, the higher the DC voltage signal V_{DC} has to be when the inverter 10 is in operation, for a given value of the reactive power Q.

Fig. 3 shows a detail configuration of the inverter 10 in this embodiment. The inverter 10 uses GTOs GU, GV, GW, GX, GY, and GZ as the controllable rectifier elements and diodes DU, DV, DW, DX, DY, and DZ. A series of the GTOs GU and GX connected in parallel with a series of the diodes DU and DX in an opposite polarity is provided for a terminal R for the R-phase of the output AC voltage. Similarly, a series of the GTOs GV and GY connected in parallel with a series of the diodes DV and DY in an opposite polarity is provided for a terminal S for the S-phase of the output AC voltage, and a series of the GTOs GW and GZ connected in parallel with a series of the diodes DW and DZ in an opposite polarity is provided for a terminal T for the T-phase of the output AC voltage. The GTOs GU, GV, GW, and the diodes DU, DV, DW are connected to a positive DC output terminal PT, while the GTOs GX, GY, GZ, and the diodes DX, DY, DZ are connected to a negative DC output terminal NT.

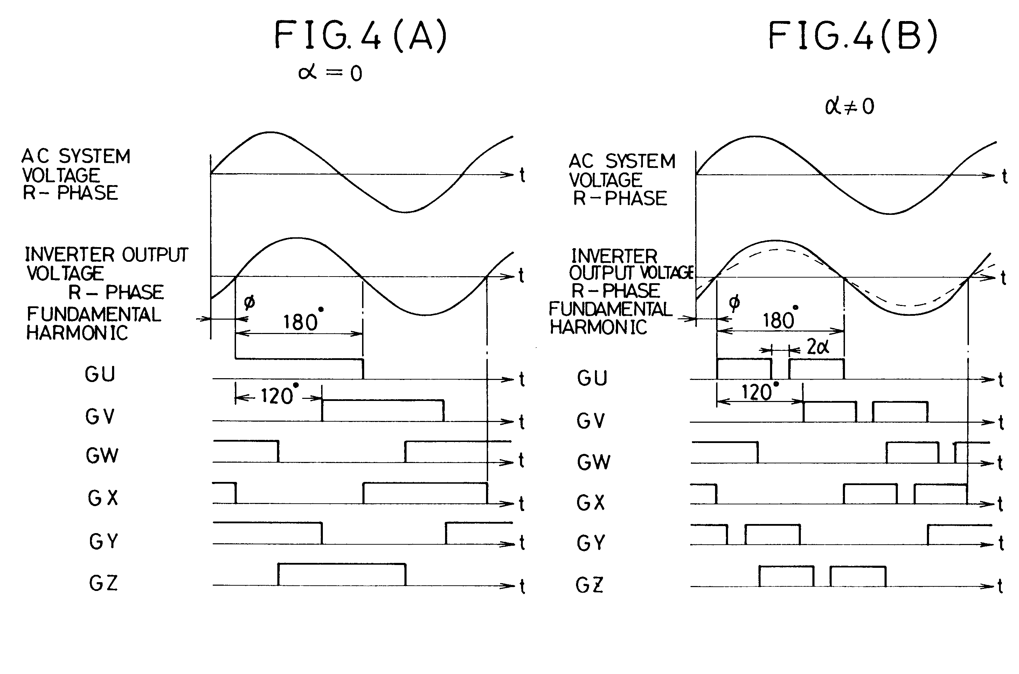

The operation of this reactive power controller will now be explained with reference to Fig. 4. In this description of the operation of the reactive power controller, the description of those parts which are identical to the conventional one, namely the control operation of the reactive power Q by the inverter 10, will be omitted since it can be found in the references cited earlier and also since those part are not needed to explain the distinctive part of the present invention.

The DC voltage signal V_{DC} representing the voltage detected by the DC voltage detector 50 and the system AC voltage signal V_{SY} representing the voltage detected by the effective AC system voltage detector 70 are fed to the starting modulation regulator 871 which calculates the starting modulation control signal MST given by : 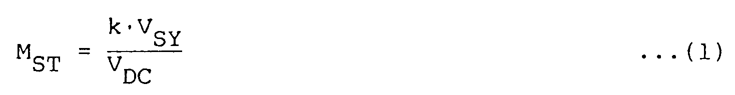
where k is a constant. Since in this embodiment, the DC voltage signal V_{DC} is related to the output AC voltage V_{IN} of the inverter 10 by the relation :

${\text{V}}_{\text{IN}} {\text{= k·V}}_{\text{DC}} \text{· M (2)}$

the equation (1) corresponds to the general expression for the reactive power Q given by : 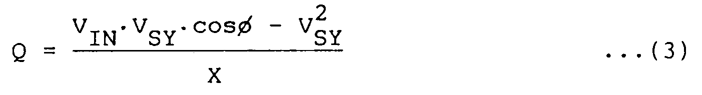
where X is the impedance of the combination of the coupling reactor 30 and the coupling transformer 40, with Q=0, and φ=0. In other words, the starting modulation regulator 871 produces the starting modulation control signal M_{ST} which makes the reactive power Q equal to zero. Then, as explained above, the value of the modulation control signal M is varied from that of the starting modulation control signal M_{ST} to that of the running modulation control signal M_{SS} gradually, as shown in Fig. 2.

This modulation control signal M from the modulation regulator 87 as well as the system voltage signal V_{SY} from the effective AC system voltage detector 70 and the reference reactive power signal Q_{R} from the Q-reference regulator 81 are fed to the reference DC voltage calculator 82 which calculates the reference DC voltage signal V_{DCR} given by :

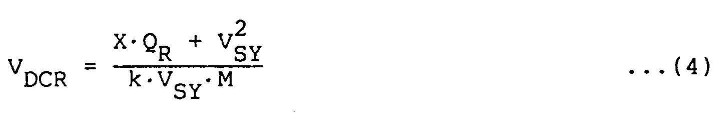

The adder 83 calculates a difference between the DC voltage signal V_{DC} from the DC voltage detector 50 and the reference DC voltage signal V_{DCR} from the reference DC voltage calculator 82, and feeds the resultant difference signal (V_{DC} - V_{DCR}) to the control compensator 84 which determines the phase difference angle φ on the basis of the difference signal (V_{DC} - V_{DCR}) from the adder 83.

This phase difference angle φ as well as the modulation control signal M from the modulation regulator 87 are fed to the phase controller 85. In this reactive power controller, the amplitude of the output AC voltage V_{IN} of the inverter 10 is controlled by means of the adjustment of periods of the electricity conduction in the GTOs of the inverter 10 by the phase controller 85. The phase controller 85 adjusts the periods of the electricity conduction of the GTOs such that there is a gap of the width 2α in the middle of the normal 180° conduction period of each GTO, where a control angle α is related to the modulation control signal M by the relation :

$\text{M = 1 - 2 sin α 0° ≦ α ≦ 60° 1 ≧ M ≧ 0 (5)}$

Fig. 4 (A) shows the case in which α=0° which occurs when M=1, which is identical to the situation of the conventional reactive power controller. On the other hand, Fig. 4 (B) shows the case in which α≠0° which occurs when M≠1. In Fig. 4 (B), the lowering of the amplitude of the output AC voltage V_{IN} of the inverter 10 is indicated by the dotted line in contrast with that of the α=0° case shown again in Fig. 4 (B) by the solid line.

As a result of the operation just explained, this reactive power controller succeeds in eliminating the initial uncontrollable reactive power as follows.

When the inverter 10 is activated, the phase difference angle φ from the control compensator 84 is equal to 0 and the modulation control signal M from the modulation regulator 87 is equal to M_{ST} given in the equation (2), so that the phase controller 85 adjusts the periods of the electricity conduction of the GTOs of the inverter 10 such that the the reactive power Q supplied to the AC system power source 100 is equal to 0. Thus, there is no reactive power supplied to the AC system power source 100 initially, and then the value of the reactive power Q is gradually brought up to the value equal to the reference reactive power signal Q_{R} specified by the Q-reference regulator 81 within a predetermined period of time dictated by the response speed of the control compensator 84.

Thus, it is possible in this reactive power controller to eliminate the initial uncontrollable reactive power, and thereby to realize an initiation of the reactive power control without an abrupt disturbance on the AC system power source.

## Claims

1. A reactive power controller for use in an AC system, comprising:
self-commutated inverter means (10) including controllable rectifier elements and diodes for generating a reactive power;
a DC capacitor (20) connected in parallel to the self-commutated inverter means;
a coupling reactor (30) connected between the self-commutated inverter means (10) and an AC system power source (100); and modulation control
means (87) producing a modulation control signal indicating amounts of an amplitude and a phase of an output AC voltage of the self-commutated inverter means (10) to be adjusted in accordance with a DC voltage over the DC capacitor (20), **characterized by**
means for adjusting the amplitude and the phase of the output AC voltage of the self-commutated inverter means (10) in accordance with the modulation control signal from the modulation control means (87) said means for adjusting comprising:
reference means (82) for setting a reference DC voltage in accordance with the AC voltage from the AC system power source and the modulation control signal from the modulation control means (87);
control compensator means (84) for determining a phase difference between the output AC voltage of the self-commutated inverter means (10) and the AC voltage from the AC system power source (100) in accordance with the reference DC voltage specified by the reference means (82); and
phase and amplitude control means (85) for adjusting the amplitude and the phase of the output AC voltage of the self-commutated inverter means (10) in accordance with the modulation control signal from the modulation control means (87) and the phase difference determined by the control compensator means (84).

2. The reactive power controller of claim 1, **characterized in that** the modulation control means (87) comprises:
first means (871) for producing a starting modulation control signal indicating amounts of the amplitude and the phase of the output AC voltage of the self-commutated inverter means (10) to be adjusted at a starting moment of the reactive power controller;
second means (872) for producing a running modulation control signal indicating amounts of the amplitude and the phase of the output AC voltage of the self-commutated inverter means (10) to be adjusted after an elapse of a predetermined period of time since the starting moment of the reactive power controller; and
third means (875) for producing the modulation control signal from the starting modulation control signal and the running modulation control signal which varies gradually from the starting modulation control signal at the starting moment to the running modulation control signal after the elapse of the predetermined period of time since the starting moment.

3. The reactive power controller of claim 1, **characterized in that** the adjusting means adjusts the amplitude and the phase of the output AC voltage of the self-commutated inverter means (10) such that the reactive power from the self-commutated inverter means (10) at a starting moment of the reactive power controller is equal to 0.

## Patentansprüche

1. Blindleistungs-Kontroller zur Benutzung in einem Wechselstromsystem, umfassend:
eine selbstkommutierende Invertereinrichtung (10), die steuerbare Gleichrichterelemente und Dioden zum Erzeugen einer Blindleistung beinhaltet;
einen parallel mit der selbstkommutierenden Invertereinrichtung verbundenen Gleichspannungskondensator (20);
eine Koppeldrosselspule (30), die zwischen die selbstkommutierende Invertereinrichtung (10) und eine Wechselstromsystem-Leistungsquelle (100) geschaltet ist; und
eine Modulationssteuereinrichtung (87) zum Erzeugen eines Modulationssteuersignals, das Größen einer Amplitude und einer Phase einer Ausgabewechselspannung der selbstkommutierenden Invertereinrichtung (10) anzeigt, die in Übereinstimmung mit einer Gleichspannung über dem Gleichspannungskondensator (20) einzustellen ist,
**gekennzeichnet** durch
eine Einstellungseinrichtung zum Einstellen der Amplitude und der Phase der Ausgabewechselspannung der selbstkommutierenden Invertereinrichtung (10) in Übereinstimmung mit dem Modulationssteuersignal von der Modulationssteuereinrichtung (87), wobei die Einrichtung zum Einstellen umfaßt:
eine Referenzeinrichtung (82) zum Setzen einer Referenzgleichspannung in Übereinstimmung mit der Wechselspannung von der Wechselstromsystem-Leistungsquelle und dem Modulationssteuersignal von der Modulationssteuereinrichtung (87);
eine Steuerkompensatoreinrichtung (84) zum Bestimmen einer Phasendifferenz zwischen der Ausgabewechselspannung der selbstkommutierenden Invertereinrichtung (10) und der Wechselspannung von der Wechselstromsystem-Leistungsquelle (100) in Übereinstimmung mit der durch die Referenzeinrichtung (82) spezifizierten Referenzgleichspannung; und
eine Phasen- und Amplituden-Steuereinrichtung (85) zum Einstellen der Amplitude und der Phase der Ausgabewechselspannung der selbstkommutierenden Invertereinrichtung (10) in Übereinstimmung mit dem Modulationssteuersignal von der Modulationssteuereinrichtung (87) und der von der Steuerkompensatoreinrichtung (84) bestimmten Phasendifferenz.

2. Blindleistungs-Kontroller nach Anspruch 1, dadurch gekennzeichnet, daß die Modulationssteuereinheit (87) umfaßt:
eine erste Einrichtung (871) zum Erzeugen eines Startmodulationssteuersignals, das Größen der Amplitude und der Phase der Ausgabewechselspannung der selbstkommutierenden Invertereinrichtung (10) anzeigt, welche in einem Starmoment des Blindleistungs-Kontrollers einzustellen sind;
eine zweite Einrichtung (872) zum Erzeugen eines Laufmodulationssteuersignals, welches Größen der Amplituden der Phase der Ausgabewechselspannung der selbstkommutierenden Invertereinrichtung (10) anzeigt, die nach Verstreichen einer vorher bestimmten Zeitspanne nach dem Startmoment des Blindleistungs-Kontrollers einzustellen sind; und
eine dritte Einrichtung (875) zum Erzeugen des Modulationssteuersignals aus dem Startmodulationssteuersignal und dem Laufmodulationssteuersignal, welches sich schrittweise von dem Startmodulationssteuersignal im Startmoment zum Laufmodulationssteuersignal nach Verstreichen der vorherbestimmten Zeitspanne nach dem Startmoment ändert.

3. Blindleistungs-Kontroller nach Anspruch 1, dadurch gekennzeichnet, daß die Einstelleinrichtung die Amplitude und die Phases der Ausgabewechselspannung der selbstkommutierenden Invertereinrichtung (10) so einstellt, daß die Blindleistung von der selbstkommutierenden Invertereinrichtung (10) im Startmoment des Blindleistungs-Kontrollers gleich Null ist.

## Revendications

1. Contrôleur de puissance réactive pour emploi dans un système à courant alternatif, comprenant:
- un moyen d'onduleur à commutation automatique (10) comportant des éléments redresseurs et des diodes contrôlables pour produire une puissance réactive;
- un condensateur à courant continu (20) monté en parallèle avec le moyen d'onduleur à commutation automatique;
- une réactance de couplage (30) montée entre le moyen d'onduleur à commutation automatique (10) et une source (100) d'alimentation du système à courant alternatif; et
- un moyen (87) de commande de modulation pour produire un signal de commande de modulation indiquant les valeurs d'une amplitude et d'une phase d'une tension alternative de sortie du moyen d'onduleur à commutation automatique (10) devant être ajustées en conformité avec une tension à courant continu aux bornes du condensateur à courant continu (20), caractérisé par:
- un moyen pour ajuster l'amplitude et la phase de la tension alternative sortant du moyen d'onduleur à commutateur automatique (10) en conformité avec le signal de commande de modulation provenant du moyen de commande de modulation (87), ledit moyen d'ajustement comportant :
- un moyen de référence (82) pour établir une tension de référence à courant continu en conformité avec la tension alternative provenant de la source d'alimentation du système à courant alternatif et avec le signal de commande de modulation provenant du moyen de commande de modulation (87);
- un moyen de compensateur de commande (84) pour déterminer une différence de phase entre la tension alternative de sortie du moyen d'ondulateur à commutation automatique (10) et la tension alternative de la source d'alimentation (100) du système à courant alternatif en conformité avec la tension à courant continu de référence spécifiée par le moyen de référence (82); et
- un moyen de commande de phase et d'amplitude (85) pour ajuster l'amplitude et la phase de la tension alternative sortant du moyen d'onduleur à commutation automatique (10) en conformité avec le signal de commande de modulation provenant du moyen de commande de modulation (87) et la différence de phase déterminée par le moyen de compensateur de commande (84).

2. Contrôleur de puissance réactive selon la revendication 1, caractérisé en ce que le moyen de commande de modulation (87) comprend :
- un premier moyen (871) pour produire un signal de commande de modulation de départ indiquant les valeurs de l'amplitude et de la phase de la tension alternative sortant du moyen d'inverseur à commutation automatique (10) devant être ajustées au moment du démarrage du contrôleur de puissance réactive;
- un second moyen (872) pour produire un signal de commande de modulation en cours indiquant les valeurs de l'amplitude et de la phase de la tension alternative sortant du moyen d'inverseur à commutation automatique (10) devant être ajustées après l'écoulement d'une période de temps prédéterminée depuis le moment du démarrage du contrôleur de puissance réactive; et
- un troisième moyen (875) pour produire le signal de commande de modulation à partir du signal de commande de modulation de départ et du signal de commande de modulation en cours qui varie progressivement entre le signal de commande de modulation de départ au moment du démarrage et le signal de commande de modulation en cours après l'écoulement de la période de temps prédéterminée depuis le moment du démarrage.

3. Contrôleur de puissance réactive selon la revendication 1, caractérisé en ce que le moyen d'ajustement régle l'amplitude et la phase de la tension alternative sortant du moyen d'inverseur à commutation automatique (10) de façon que la puissance réactive provenant du moyen d'inverseur à commutation automatique (10) au moment du démarrage du contrôleur de puissance réactive soit égale à 0.
